# EUROPÄISCHE PATENTANMELDUNG

(11) **EP 2 015 438 A2**
(43) Veröffentlichungstag der Anmeldung: **14.01.2009**
(21) Anmeldenummer: 08012217.9
(22) Anmeldetag: 07.07.2008
(51) Int. Cl.: H02M 7/02

(54) **Netzgerät**

(30) Priorität: 13.07.2007 DE 202007009919 U
(71) Anmelder: VIBRADORM GmbH, 64720 Michelstadt (DE)
(72) Erfinder: Christoph Günther, 64711 Erbach (DE)
(74) Vertreter: Katscher Habermann Patentanwälte

(57) **Zusammenfassung**

Ein Netzgerät mit automatischer Anpassung an verschiedene Netzspannungen weist einen Transformator (1) mit zwei Primärwicklungen (2, 3) auf, der über Umschaltkontakte eines Relais (8) derart mit Netzanschlüssen (5, 6) verbunden ist, dass in Abhängigkeit vom Schaltzustand des Relais (8) die Primärwicklungen (2, 3) in Reihe oder parallel geschaltet sind und dass sekundärseitig eine Einrichtung (14) zur Spannungserkennung vorgesehen ist, deren Ausgang mit dem Antrieb (10) des Relais (8) verbunden ist. Die bezüglich ihres Wicklungssinns voneinander entfernt liegenden Enden der Wicklungen (2, 3) sind mit je einem Netzanschluss (5, 6) verbunden. An die weiteren Enden der Wicklungen (2, 3) ist je ein Schaltarm des Relais (8) angeschlossen, der in einem ersten Schaltzustand des Relais (8) die weiteren Enden miteinander und in einem zweiten Schaltzustand die weiteren Enden mit dem jeweils anderen Netzanschluss (6, 5) verbindet. In einer nur beim ersten Schaltzustand stromdurchflossenen Leitung ist eine erste Sicherung (9) zur Absicherung bei einer höheren Netzspannung und in einer in beiden Schaltzuständen Strom durchflossenen Leitung ist eine zweite Sicherung (7) zur Absicherung bei einer niedrigeren Netzspannung angeordnet. Die Einrichtung zur Spannungserkennung ist von einem Mikrocontroller (14) gebildet, wobei einem Eingang des Mikrocontrollers (14) eine von der Sekundärspannung des Transformators abgeleitete Spannung zuführbar ist.

## Beschreibung

Die Erfindung betrifft ein Netzgerät mit automatischer Anpassung an verschiedene Netzspannungen

Für verschiedene Geräte steht bei der Herstellung noch nicht fest, mit welcher Spannung bzw. in welchem Land die Geräte letztendlich betrieben werden. Es bestehen daher insbesondere logistische Schwierigkeiten, für die jeweilige Spannung - insbesondere 115V/120V bei 60 Hz und 230V/240V bei 50 Hz - angepasste Netzgeräte vorzuhalten. Diese logistischen Schwierigkeiten könnten an sich mit umschaltbaren Netzgeräten behoben werden. Dadurch sind jedoch fehlerhafte Einstellungen und die damit verbundenen Störungen nicht auszuschließen.

Aufgabe der vorliegenden Erfindung ist es daher, ein Netzgerät mit automatischer Anpassung an verschiedene Netzspannungen vorzuschlagen. Diese Aufgabe wird erfindungsgemäß dadurch gelöst, dass ein Transformator mit zwei Primärwicklungen über Umschaltkontakte eines Relais derart mit Netzanschlüssen verbunden ist, dass in Abhängigkeit vom Schaltzustand des Relais die Primärwicklungen in Reihe oder parallel geschaltet sind und dass sekundärseitig eine Einrichtung zur Spannungserkennung vorgesehen ist, deren Ausgang mit dem Antrieb des Relais verbunden ist.

Das erfindungsgemäße Netzgerät kann in vorteilhafter Weise dadurch ausgestaltet werden, dass die bezüglich ihres Wicklungssinns voneinander entfernt liegenden Enden der Wicklungen mit je einem Netzanschluss verbunden sind, dass an die weiteren Enden der Wicklungen je ein Schaltarm des Relais angeschlossen ist, der in einem ersten Schaltzustand des Relais die weiteren Enden miteinander und in einem zweiten Schaltzustand die weiteren Enden mit dem jeweils anderen Netzanschluss verbindet.

Das erfindungsgemäße Netzgerät benötigt keinerlei externe Spannungswahlschalter und kann ohne weitere Maßnahmen an Wechselspannungsnetzen mit den weltweit üblichen Spannungen einschließlich deren Toleranzbereiche betrieben werden. Der Transformator mit den zwei Primärwicklungen ist derart dimensioniert, dass der gesamte Spannungsbereich abgedeckt werden kann. Einzelheiten dazu können vom Fachmann durchgeführt werden, insbesondere ein Kompromiss aus optimaler Leistung und ausreichender Flexibilität.

Bei im Wesentlichen gleicher Leistungsaufnahme des Gerätes, wenn es mit verschiedenen Spannungen betrieben wird, verhalten sich die aus dem Netz aufgenommenen Ströme umgekehrt proportional zur Spannung. Um dennoch eine zuverlässige Absicherung zu gewährleisten, ist bei einer Weiterbildung der Erfindung vorgesehen, dass in einer nur beim ersten Schaltzustand stromdurchflossenen Leitung eine erste Sicherung zur Absicherung bei einer höheren Netzspannung und in einer in beiden Schaltzuständen Strom durchflossenen Leitung eine zweite Sicherung zur Absicherung bei einer niedrigeren Netzspannung angeordnet sind. Diese Weiterbildung ist vorzugsweise derart ausgebildet, dass die erste Sicherung zwischen Relaiskontakten, an welchen die Schaltarme bei höherer Netzspannung anliegen, und die zweite Sicherung in einer mit einer der Netzanschlüsse verbundenen Leitung angeordnet ist. Dadurch wird im Fehlerfall immer nur eine der beiden Sicherungen durchbrennen, womit der Service vereinfacht wird.

Die mit dem erfindungsgemäßen Netzgerät zu versorgenden Geräte weisen ohnehin meistens einen Mikrocontroller auf. Deshalb kann die Erfindung ohne diesbezüglichen Mehraufwand derart ausgebildet sein, dass die Einrichtung zur Spannungserkennung von einem Mikrocontroller gebildet ist, wobei einem Eingang des Mikrocontrollers eine von der Sekundärspannung des Transformators abgeleitete Spannung zuführbar ist. Das erfindungsgemäße Netzgerät kann sowohl als eigenständiges Gerät ausgebildet sein als auch mit dem zu versorgenden Gerät eine Baueinheit bilden.

Zweckmäßigerweise ist bei der Erfindung vorgesehen, dass die Spannungserkennung nach einem Einschalten erfolgt. Dabei ist es vorteilhaft, wenn im abgefallenen Schaltzustand des Relais eine Reihenschaltung der Primärwicklungen vorliegt.

Alternativ oder zusätzlich zur Spannungserkennung unmittelbar nach dem Einschalten kann bei der Erfindung vorgesehen sein, dass während des laufenden Betriebs im Mikrocontroller eine Überprüfung erfolgt, ob die Sekundärspannung einen vorgegebenen höchstzulässigen Wert überschreitet, und zutreffendenfalls auf die höhere Netzspannung umgeschaltet wird.

Das erfindungsgemäße Netzgerät eignet sich für verschiedene Geräte. Eine vorteilhafte Anwendung ist die Stromversorgung von Antrieben für Möbel, insbesondere für höhenverstellbare Tische.

Ein Ausführungsbeispiel der Erfindung wird anhand der ein Schaltbild schematisch darstellenden Zeichnung näher erläutert.

Der Transformator 1, der vorzugsweise als Ringkerntransformator ausgebildet ist, umfasst zwei Primärwicklungen 2, 3 und eine Sekundärwicklung 4. Letztere steht stellvertretend für häufig verwendete mehrere Sekundärwicklungen, da die oben erwähnten Geräte häufig verschiedene Betriebsspannungen benötigen. Diese Unterscheidungen sind jedoch für das Verständnis der Erfindung nicht erforderlich.

Die beiden bezüglich des Wickelsinns entgegengesetzten Enden der Primärwicklungen 2, 3 sind mit Netzanschlüssen 5, 6 verbunden - in an sich bekannter Weise über Netzschalter, Kabel und/oder Stecker. In der Zuleitung zu dem Netzanschluss 5 liegt eine Sicherung 7. Die weiteren Anschlüsse der Primärwicklungen 2, 3 sind mit Schaltarmen eines Relais 8 verbunden, das im Ruhezustand diese Wicklungsenden über eine Sicherung 9 miteinander verbindet. Die Primärwicklungen 2, 3 sind dann in Reihe geschaltet, so dass ein Betrieb bei 240V möglich ist. Die Sicherung 9 ist dabei für den bei 240V erforderlichen Stromwert ausgelegt.

Wird beim Einschalten des Netzgerätes eine zu niedrige Spannung festgestellt, erhält der Antrieb 10 des Relais 8 Strom, so dass das Relais anzieht, wobei die Arme in die untere Stellung gelangen. Die dann an die weiteren Wicklungsenden angeschlossenen Kontakte sind kreuzweise mit den Netzanschlüssen 5, 6 verbunden. Damit sind die Primärwicklungen 2, 3 für eine Netzspannung von 120V parallelgeschaltet. Die Sicherung 7 ist für den dann größeren Netzstrom ausgelegt. Beim Betrieb an 240V sind beide Sicherungen im Stromkreis, so dass die Sicherung mit dem kleineren Strom im Fehlerfall als erste auslöst. Im Betrieb wird daher immer nur eine der beiden Sicherungen durchbrennen, was den Service vereinfacht.

Beispielhaft für die sekundärseitige Beschaltung des Transformators 1 ist bei dem Ausführungsbeispiel eine Gleichrichterschaltung 11 mit einem anschließenden Ladekondensator 12 vorgesehen. An die mit + und - bezeichneten Leitungen ist ein Gerät 13 angeschlossen, das eine Reihe von Schaltungen, unter anderem auch Endstufen für Motore, Bedienelemente und Endabschalter, enthält. Ferner enthält das Gerät 13 einen Mikrocontroller 14, der die verschiedenen Funktionen steuert und außerdem die über einen Spannungsteiler 15, 16 zugeführte Spannung misst und mit einem Schwellwert vergleicht. In Abhängigkeit vom Vergleichsergebnis wird das Relais 8 gesteuert.

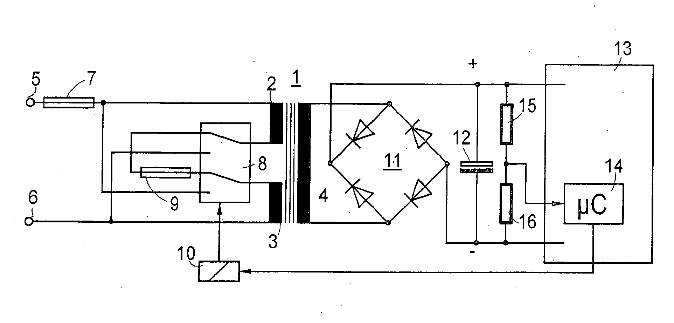

## Patentansprüche

1. Netzgerät mit automatischer Anpassung an verschiedene Netzspannungen, **dadurch gekennzeichnet, dass** ein Transformator (1) mit zwei Primärwicklungen (2, 3) über Umschaltkontakte eines Relais (8) derart mit Netzanschlüssen (5, 6) verbunden ist, dass in Abhängigkeit vom Schaltzustand des Relais (8) die Primärwicklungen (2, 3) in Reihe oder parallel geschaltet sind und dass sekundärseitig eine Einrichtung (14) zur Spannungserkennung vorgesehen ist, deren Ausgang mit dem Antrieb (10) des Relais (8) verbunden ist.

2. Netzgerät nach Anspruch 1, **dadurch gekennzeichnet, dass** die bezüglich ihres Wicklungssinns voneinander entfernt liegenden Enden der Wicklungen (2, 3) mit je einem Netzanschluss (5, 6) verbunden sind, dass an die weiteren Enden der Wicklungen (2, 3) je ein Schaltarm des Relais (8) angeschlossen ist, der in einem ersten Schaltzustand des Relais (8) die weiteren Enden miteinander und in einem zweiten Schaltzustand die weiteren Enden mit dem jeweils anderen Netzanschluss (6, 5) verbindet.

3. Netzgerät nach einem der Ansprüche 1 oder 2, **dadurch gekennzeichnet, dass** in einer nur beim ersten Schaltzustand stromdurchflossenen Leitung eine erste Sicherung (9) zur Absicherung bei einer höheren Netzspannung und in einer in beiden Schaltzuständen Strom durchflossenen Leitung eine zweite Sicherung (7) zur Absicherung bei einer niedrigeren Netzspannung angeordnet sind.

4. Netzgerät nach Anspruch 3 , **dadurch gekennzeichnet, dass** die erste Sicherung (9) zwischen Relaiskontakten, an welchen die Schaltarme bei höherer Netzspannung anliegen, und die zweite Sicherung (7) in einer mit einer der Netzanschlüsse (5) verbundenen Leitung angeordnet ist.

5. Netzgerät nach einem der vorhergehenden Ansprüche, **dadurch gekennzeichnet, dass** die Einrichtung zur Spannungserkennung von einem Mikrocontroller (14) gebildet ist, wobei einem Eingang des Mikrocontrollers (14) eine von der Sekundärspannung des Transformators abgeleitete Spannung zuführbar ist.

6. Netzgerät nach einem der vorhergehenden Ansprüche, **dadurch gekennzeichnet, dass** die Spannungserkennung nach einem Einschalten erfolgt.

7. Netzgerät nach Anspruch 6, **dadurch gekennzeichnet, dass** im abgefallenen Schaltzustand des Relais (8) eine Reihenschaltung der Primärwicklungen (2, 3) vorliegt.

8. Netzgerät nach einem der vorhergehenden Ansprüche, **dadurch gekennzeichnet, dass** während des laufenden Betriebs im Mikrocontroller (14) eine Überprüfung erfolgt, ob die Sekundärspannung einen vorgegebenen höchstzulässigen Wert überschreitet, und zutreffendenfalls auf die höhere Netzspannung umgeschaltet wird.

9. Netzgerät nach einem der vorhergehenden Ansprüche, **gekennzeichnet durch** die Ausbildung zur Stromversorgung von Antrieben für Möbel, insbesondere für höhenverstellbare Tische.
